(19) Europäisches Patentamt
European Patent Office
Office européen des brevets

(11) Publication number : 0 586 196 A1

(12) EUROPEAN PATENT APPLICATION

(21) Application number : 93306789.4

(22) Date of filing : 26.08.93

(51) Int. Cl.$^5$ : **B01J 23/85**, B01J 31/02, B01J 37/08, C10G 47/12

(30) Priority : 01.09.92 US 937217

(43) Date of publication of application : 09.03.94 Bulletin 94/10

(84) Designated Contracting States : AT BE CH DE DK ES FR GB GR IE IT LI NL PT SE

(71) Applicant : JOSEPH CROSFIELD & SONS LTD.
Bank Quay
Warrington, Cheshire, WA5 1AB (GB)

(72) Inventor : Notermann, Thomas M.
12032 74th Avenue
Palos Heights, Illinois 60463 (US)

(74) Representative : Hugot, Alain et al
Unilever plc, Patent Division, Colworth House
Sharnbrook, Bedford MK44 1LQ (GB)

(54) **Silicone modified hydrotreating catalysts.**

(57) A decomposable compound selected from compounds of the metals of Group IVA of the Periodic Table (for example silicone) is mixed with a hydrocarbon-containing feed stream. The hydrocarbon-containing feed stream containing such decomposable compound is then contacted with a catalyst composition having a support of alumina, silica and silica-alumina and as promoters at least one Group VIB metal and at least one iron Group VIII metal. The introduction of the decomposable compound can be commenced when the catalyst is new, partially deactivated or spent with a beneficial result on the catalyst's ability to remove nitrogen, sulfur, or other contaminants from various petroleum feedstreams by hydrotreating.

EP 0 586 196 A1

Jouve, 18, rue Saint-Denis, 75001 PARIS

## Field of the Invention

The present invention relates to a process for modifying the surface of catalyst particles used in hydrotreating petroleum hydrocarbon liquids and gases. More particularly, the invention relates to modifying the catalyst surface with a decomposable Group IVA compound such as an organo-silicon species to produce a catalyst composition which has significantly improved activity for removing nitrogen from petroleum hydrocarbons.

## BACKGROUND OF THE INVENTION

In the oil industry, many processes are known in which hydrocarbon-containing feeds are catalytically treated with hydrogen; such as, hydrodesulfurization, hydrodenitrogenation, and hydrocracking. In such processes, use is made of catalysts built up form a carrier material, such as alumina, on which there are deposited one or more catalytically active metals or compounds thereof; examples of such metals are molybdenum, nickel, cobalt and tungsten.

Catalysts meeting specific requirements have heretofore been prepared by methods wherein generally the alumina support is formed by precipitating alumina in hydrous form from a solution. A slurry is formed upon precipitation of the hydrous alumina. This slurry is concentrated and generally spray dried to provide a catalyst support or carrier. The carrier is then washed, dried, extruded, further dehydrated, and impregnated with catalytically active metals. Alumina-silica carriers can also be prepared by employing an alkali metal silicate along with the aluminate solution.

The catalytically active metals comprise at least one element from Group VIB of the periodic Table and at least one element from Group VIII, particularly the iron group of metals. In specifically preferred embodiments of this invention, the carrier or support is promoted with combinations of elements selected from (a) cobalt and molybdenum, (b) nickel and molybdenum, and (c) tungsten and nickel. The preferred catalyst contains 1 to 30 percent by weight of catalytic promoter elements based on total catalyst composition weight. In addition, the catalysts can contain other components, such as phosphorous, halogen, barium, zeolites and clays, and the like.

It is common knowledge that optimum results are obtained in using such catalysts when the catalytically active metals are in their sulfided form. See for instance M. Wind's article in Oil & Gas Journal Feb. 24 1992, which also describes several techniques for preparing sulfided catalysts. These techniques comprise treating a fresh catalyst in a reactor at elevated temperature with a combination of hydrogen sulfide and hydrogen, a naturally sulfurous feed (non-spiked feed), or a feed to which a sulfur compound, such as carbon disulfide or dimethyldisulfide, has been added (spiked feed).

These hydrotreating catalysts can be used in a variety of petroleum hydrogen-treating operations; such as, hydrodesulfurization, hydrodenitrogenation, hydrocracking, and hydrogenation. Of these, the hydrodenitrogenation operation is often considered the most troublesome, especially when applied to residuum feedstock. It has been indicated that nitrogen in heavy petroleum fractions is predominantly in the form of condensed aromatic-N-heterocyclic compounds. The hydrodenitrogenation of such compounds is generally considered to involve ring hydrogenation, followed by C-N bond hydrogenolysis. For example, hydrodenitrogenation of quinoline involves hydrogenation of the pyridine moiety followed by hydrogenation of the adjacent benzene ring prior to C-N hydrogenolysis.

It is generally known in the art that the catalyst's denitrogenation activity can be improved by utilizing carriers with surface acidity, such as amorphous silica-aluminas or zeolites. The reason for this is not generally accepted, although it is possible that a Hofmann elimination mechanism is operative in parallel to the metal catalyzed hydrogenolysis of C-N bonds. According to such a mechanism, ring -NH- is first protonated by a Bronsted acid site to form substituted quaternary ammonium ion ($-NH^{+}_{2}-$). Meanwhile, B-H (hydrogen attached to the B-carbon atom) is abstracted by a basic site resulting in C-N bond cleavage. Accordingly, increasing the Bronsted acidity of a catalyst improves deamination activity by accelerating the Hofmann elimination pathway.

While amorphous silica-aluminas or zeolites are generally known to possess acidity, it is also known that they possess a broad distribution of acid strengths, including strongly acidic sites which can contribute to undesired side reactions such as coke formation and consequent premature loss in catalyst performance. The present invention overcomes the limitations of prior art by providing -AL-O-Si-OH surface species with uniform acid strengths, effective for the hydrodenitrogenation reaction but ineffective for undesired side reactions.

Accordingly, an object of the invention is to provide a hydrotreating catalyst having increased activity.

Another object of the invention is to provide a method for modifying the surface properties of hydrotreating catalysts to enhance the activity of the catalyst.

A further object is to provide a hydrotreating process having enhanced activity for desulfurization and dehydronitrogenation of hydrocarbon-containing fractions.

Other objects, aspects as well as the several advantages will be apparent to those skilled in the art upon reading the specification and appended claims.

## SUMMARY OF THE INVENTION

Broadly, the invention comprises heterogeneous catalyst compositions that have been contacted at an elevated temperature with decomposable compounds of the metals of Group IVA to modify the surface properties and characteristics of the catalyst composition and enhance catalyst activity.

More specifically, the invention comprises treatment of catalyst compositions with an organo-silicon compound wherein the catalyst has been presulfided or is subjected to sulfiding during treatment with the organo-silicon compound.

Further, according to the present invention, there is provided a process for modifying the surface of a hydrotreating catalyst, which process comprises treating a catalyst in a reactor at elevated temperature with a feed to which a sulfur compound, such as dimethyldisulfide, and an organo-silicon compound, such as polymethylsiloxane, has been added (doublely spiked feed).

## DETAILED DESCRIPTION OF INVENTION

The amount of sulfur compound to be used is dependent on the degree of sulfiding desired. Conventional degrees of sulfiding are in the range of 0.5 X stoichiometric to 1.5 X stoichiometric, on which basis it is easy for the skilled person to determine the amount of sulfur compound to be used in the presulfiding process. Stoichiometric refers to the active metal components, for example nickel and molybdenum.

The amount of organo-silicon compound to be used is dependent on the degree of silanation desired. According to the present invention, silanation is preferred in the range of 0.1 to 1 monolayer, based on the surface area of the catalyst. For conventional catalysts used in this art, the concentration of silica preferred is generally in the range of .1 to 10 wt.%. A skilled person can easily determine the amount of organo-silicon compound to be used in the presilanation process, by taking into account the surface area of the catalyst.

The organo-silicon compound used in the process according to the present invention has the following formula:

```
      X
      |
  y--Si--W
      |
      Z
```

wherein X,Y,Z, and W, which can be the same or different, are selected from (-R), (-OR), (-SiH3), (-COOR), (-Cl), and (-[OSi(OR)2]pOSi(OR)3), wherein R is a hydrogen atom or a hydrocarbon radical having up to 30 carbon atoms; with the proviso that not all of W, X, Y and Z are hydroxy groups. The radical R is preferably an alkyl, cycolalkyl, aryl, alkaryl, aralkyl or alkyl-cycolalkyl radical. The radical R can be methy, ethyl, isopropyl, n-propyl, n-butyl, isobutyl, cyclohexyl, cyclopentyl, phenyl, phenylcyclohexyl or alkylphenyl. Among the above cited compounds, the orthosilicic acid esters, for instance the methyl, isopropyl, isobutyl and n-butyl tetrasilicates are preferred.

Any hydrotreating catalyst having catalytic activity can be modified according to the process of the present invention. Generally, the hydrotreating catalysts comprise a suitable support promoted with at least one element from Group VIB and at least one element from the iron Group VIII metals of the Periodic Table. Representative metals include molybdenum, tungsten, nickel, cobalt and the like. The amounts of each of the promoters used for hydrotreating catalysts is well known in the art. Suitable support materials that can be used include aluminium oxides, titanium oxides, silicon oxides, or magnesium oxides, as well as mixtures thereof.

Similarly, the conditions of temperature, pressure, contacting time, amounts of hydrogen, hydrocarbon feeds and other reaction parameters are well known to those skilled in the art and need not be described in details with respect to dehydrosulfurization and dehydronitrogenation of feeds containing sulfur- and nitrogen-containing compounds.

The products obtained by the present process have surface structures and compositions substantially different from those of the starting material. Particularly in the case of an alumina supported catalyst treated by the invention process, the surface exhibits silanol groups which develop at the expense of the hydroxyl groups of alumina. One-to-one bonding between silicon and aluminum (Al-O-Si-OH) occurs upon deposition of the

organ-silicon compound on alumina. In other words, a monolayer of silica is formed until the alumina surface is almost fully covered.

Although the surface reaction during deposition is not known exactly, deposition of the silicon compound on alumina support rather than on the deposit silicon is considered important. Otherwise, silicon alkoxide would accumulate on the deposit silica as well as on alumina to form large silica islands and close the pore structure of the alumina.

The site-specific deposition may be due to the properties of the support and the deposit reagent, which consist of the interface layer. In the case of an alumina support, alumina is regarded to be a basic medium whereas silica is an acidic oxide. These different properties seem to make it easy to form the interface layer.

A deposit reagent example, $Si(OCH_3)4$, is polyfunctional due to its four alkoxide groups. This reagent could polymerize into large silicon compounds, but the polymerization requires the simultaneous hydration of alkoxide into hydroxide. According to the present invention, the deposition is carried out in the presence of only impurity or by-product water vapour. Consequently, the accumulation of silicon on the deposit silica through the siloxane bond (-Si-O-Si-) may not readily occur, and the silicon alkoxide should be deposited on the exposed alumina surface. Cross-linking of silicon compounds to form large silica islands and block the alumina pores is not the objective of the present invention.

Because the electronegativity of the silicon cation (Si4+) is larger than that of the aluminum cation (Al3+), the silicon atom pulls an electron to become negatively charged, ie. $-Al-O-Si-OH^{+}$. Because of this induced effect, silanol attached to aluminum may behave as a weak Bronsted acid site. Due to the discrete structure of the deposit silanol, the acid strength distribution is more uniform. Therefore, the silica monolayer on alumina catalyzes the desired hydrodenitrogenation reaction effectively. The uniform acid strength distribution is a characteristic of the present invention material, distinguishable from the usual mixed oxides of silica and alumina. The silica-alumina interface does not possess the strong Bronsted acidity characteristic of mixed oxides of silica and alumina. Strong acid sites can catalyze undesired side reactions such as cracking or coking which detract from catalyst activity performance.

The conditions obtaining for treating the hydrotreating catalyst with organo-silicon compound can vary appreciably depending upon the particular silicon compound being used, temperature, pressure and length of contacting and method of contacting. In general, the temperature will be sufficient to cause decomposition of the organo-silicon compound and deposit silica on the catalyst surface.

Preferably, the temperature ranges from about 500-700°F with elevated pressures of about 1000-1500 psig and liquid hourly space velocities (LHSV) of from about 1-7. The amount of hydrogen present ranges from about 0 to 20 mls/ml catalyst/minute.

The conditions employed for sulfiding hydrotreating catalysts are well known to those skilled in the art. In general, the conditions employed for sulfiding the catalyst can be the same as used for silanating described above.

The hydrotreating catalyst can be contacted with an organic sulfur compound and an organo-silicon compound, either separately or together, in a suitable liquid carrier, eg. a light hydrocarbon solvent, such as kerosene, diesel fuel, jet fuel or other inert liquid material. Solvents that can be used generally boil in the range of about 300 to about 600 F. The catalyst can be pre-sulfided or simultaneously treated with sulfur and silicone.

The catalyst modification and subsequent use for hydrotreating can take place in a fixed bed reaction zone, moving bed reaction zone, or other suitable methods of effecting efficient contact between the catalyst and treating materials or streams being hydrotreated.

A better understanding of the invention will be obtained by referring to the following examples.

## CATALYST ACTIVITY

Evaluations of catalyst activities were based on rates of removal of sulfur and nitrogen as calculated from analyses of feedstock and hydrotreated products using standard analytical and testing procedures. Under the test conditions employed, the kinetic behaviour of desulfurization is represented by the relationship k= LHSV $(S^{-0.5} - S_0^{-0.5})$, where K is the desulfurization rate, LHSV is feed liquid hourly space velocity in the hydrotreating test, and S and $S_0$ are weight percent sulfur in product and feed oil, respectively. For nitrogen removal, K=LHSV $\ln(N_0/N)$, where k is the denitrogenation rate, LHSV is as defined above, and $N_0$ and N are feed and product nitrogen concentrations, respectively (ln is the natural logarithm). In a standard test, the conditions were kept the same for all catalysts tested and an increase in the value of k becomes a direct indication of an increase in activity. It is useful to choose one catalyst and its k value as a reference against which others may be compared, leading to a simple measure of relative activity.

Heavy vacuum gas oils were used as the test feedstocks and had the following properties:

| | FEED #1 | FEED #2 |
|---|---|---|
| API GRAVITY | 19.7 | 19.6 |
| Wt. % SULFUR | 2.9 | 2.3 |
| Wppm NITROGEN | 1317 | 1180 |

The test reactors used were 3/4 inch O.D. stainless steel tubes accommodating a 60cc catalyst charge uniformly diluted with 14*28 mesh size inert alumina. A triple reactor unit was placed in an electrically-heated fluidized isothermal sand bath equipped with automatic temperature control. Brooks mass flow meters controlled the flow of hydrogen while high pressure diaphragm feed pumps controlled the flow of oil to each reactor. A test began with purging the reactors with nitrogen while heating to 400 F. The catalysts were then presulfided with a solution of an organic sulfur compound in a kerosene solvent according to a standard procedure and the unit was operated overnight to condition the catalyst. Two standard test conditions were employed:

| STD. CONDITION | A | B |
|---|---|---|
| TEMP. | 675°F | 700°F |
| PRESS. | 1000PSIG | 1500PSIG |
| LHSV | 1.5 | 1.0 |
| H2/OIL | 1500SCF/Barrel | 2500SCF/Barrel |

SCF = STANDARD CUBIC FEET

Samples of product oil were taken after about 16 hours on stream, stripped free of H2S using nitrogen gas and analyzed for sulfur and nitrogen content.

EXAMPLE 1 CONTROL

The three sulfided catalysts described in Table 1 were tested as described above using standard test conditions A and feedstock vacuum gas oil #1. The desulfurization and denitrogenation activities are also reported in Table 1.

Table 1

| CATALYST | 502 | 500 | 520 |
|---|---|---|---|
| Chem. Composition Weight % | | | |
| NiO | 4.0 | 1.8 | 3.6 |
| MoO3 | 14.0 | 11.2 | 11.0 |
| SiO2 | 2.0 | 0.0 | 0.2 |
| Na2O | .1 | .01 | .01 |
| P2O5 | 5.2 | .5 | .5 |
| A12O3 | balance | balance | balance |
| Physical Properties | | | |
| Surface area (m2/g) | 230 | 190 | 300 |
| Apparent Bulk | | | |
| Density (g/ml) | .71 | .54 | .62 |
| Activity | | | |
| Relative Vol. | | | |
| Desulfurization | .75 | .69 | .75 |
| Denitrogenation | .72 | .54 | .51 |
| STANDARD CONDITIONS A; VACUUM GAS OIL #1 | | | |

EXAMPLES 2-5

The three catalysts described in Table 1 were again tested as in example 1 with the exception that after presulfiding and before testing with the feedstock #1, the catalysts were contacted with a kerosene solvent containing the same organic sulfur compound and 0.7 wt.% silicon (polydimethylsiloxane) for a period of six hours. The silicon treatment reactor conditions are listed in Table 2 under Example 2.

Table 2

| SILICONE TREATMENT CONDITIONS Examples 2-5 | | |
|---|---|---|
| PRESSURE= 1000 PSIG, | | HYDROGEN FLOW 670 sccm |
| EXAMPLE | LHSV | TEMPERATURE (°F) |
| 2 | 3.5 | 500 |
| 3 | 3.5 | 600 |
| 4 | 7.0 | 500 |
| 5 | 7.0 | 600 |

Following this treatment with silicone, the catalysts were contacted with vacuum gas oil feedstock #1 under the A standard test conditions as in example 1. Samples of product oil were again taken after 16 hours on stream, stripped free of $H_2S$ using nitrogen gas and analyzed for sulfur and nitrogen contents. After reaction, the discharged catalysts were analyzed to determine the amount of silica retained on the catalyst by the silicone treatment. The activity results and amount of silica retained on the catalyst sample are reported in Table

3. As the results in Table 3 show, the silicone treatment increases the hydrodenitrogenation activities of each of the three catalysts by 20% or more compared to the control test. The chemical analysis of the discharged catalysts confirmed that silica was retained on each catalyst. The amount of silica retained varied with the catalyst used and the silicone treatment conditions.

In Examples 3-5 the catalysts were treated with silicone as described above in Table 2. The activity results and amount of silica retained on the catalyst samples are reported in Table 3. As the results in Table 3 show, the silicone treatments increase the hydrodenitrogenation activities of each of the three catalysts by 20% or more compared to the control test.

Table 3

| ACTIVITY COMPARISONS AFTER SILICONE TREATMENTS | | | | | | | | | |
|---|---|---|---|---|---|---|---|---|---|
| CATALYST | #502 | | | #500 | | | #520 | | |
| | ACTIVITIES | | SiO2 retained | ACTIVITIES | | SiO2 retained | ACTIVITIES | | SiO2 retained |
| EXAMPLE | HDS | HDN | Wt. % | HDS | HDN | Wt. % | HDS | HDN | Wt. % |
| 1 control | .75 | .72 | 0 | .69 | .54 | 0 | .75 | .51 | 0 |
| 2 | .78 | .86 | 0.25 | .66 | .67 | 1.0 | .73 | .62 | 1.7 |
| 3 | .75 | .90 | .95 | .66 | .62 | 6.1 | - | - | - |
| 4 | .78 | .99 | 1.6 | .76 | .66 | 1.8 | - | - | - |
| 5 | .78 | .89 | 1.4 | .67 | .71 | 6.5 | .76 | .76 | 3.2 |

HDN = hydrodenitrogenation activity; HDS = hydrodesulfurization activity.

EXAMPLE 6 - CONTROL

Two higher activity catalysts, described in Table 4, were tested as described in Example 1 using standard test conditions B and feedstock vacuum gas oil #2. The test was conducted five days with the desulfurization and denitrogenation activities reported in Tables 5 and 6.

TABLE 4

| HIGHER ACTIVITY CATALYSTS | | |
|---|---|---|
| **CATALYST** | **HM535** | **LD599** |
| Chem. Composition Weight % | | |
| NiO | 5.4 | 5.7 |
| MoO3 | 28.6 | 25.7 |
| SiO2 | - | 3.2 |
| Na2O | .01 | .01 |
| P2O5 | 1.6 | 1.6 |
| Al2O3 | balance | balance |
| Physical Properties | | |
| Surface Area (m2/g) | 207 | 272 |
| Apparent Bulk Density (g/ml) | .86 | .82 |

Evaluated with vacuum gas oil #2, standard test conditions B.

TABLE 5

| ACTIVITY COMPARISONS USING SILICONE TREATMENT CATALYST = HM535 (see Table 4) | | | | |
|---|---|---|---|---|
| **Example 6 - control** | | | **Example 7 - Silicone treated** | |
| **ACTIVITIES** | | | **ACTIVITIES** | |
| **DAY ON STREAM** | **HDS** | **HDN** | **HDS** | **HDN** |
| 1. | .87 | 1.43 | .78 | 1.75 |
| 2. | .85 | 1.38 | .83 | 1.63 |
| 3. | .83 | 1.30 | .82 | 1.50 |
| 4. | .84 | 1.25 | .83 | 1.44 |
| 5. | .82 | 1.25 | .84 | 1.41 |

EVALUATED WITH GAS OIL #2 AND STANDARD TEST CONDITIONS B
HDS = hydrodesulfurization activity,
HDN = hydrodenitrogenation activity.

EXAMPLE 7

The same two catalysts of Example 6 were contacted with silicone using the conditions of Example 5. Following this treatment with silicone, the catalysts were contacted with vacuum gas oil feedstock #2 under standard test conditions B. The testing was conducted for five days, as in Example 6, and the desulfurization and denitorgenation activities are reported in Tables 5 and 6. These results again demonstrate that the silicone treatment of the present invention significantly enhances the catalysts' ability to remove nitrogen from oil feedstocks. The silicone treatment increased the five day average HDN activities of catalysts HM535 and LD599 by 15% and 9%, respectively.

TABLE 6

| ACTIVITY COMPARISONS USING SILICONE TREATMENT CATALYST = LD599 (see Table 4) | | | | |
|---|---|---|---|---|
| **Example 6 - control** | | | **Example 7 - Silicone treated** | |
| **ACTIVITIES** | | | **ACTIVITIES** | |
| **DAY ON STREAM** | **HDS** | **HDN** | **HDS** | **HDN** |
| 1. | .91 | 1.39 | .85 | 1.60 |
| 2. | .87 | 1.36 | .87 | 1.46 |
| 3. | .85 | 1.30 | .86 | 1.45 |
| 4. | .87 | 1.24 | .85 | 1.36 |
| 5. | .84 | 1.21 | .84 | 1.32 |

EVALUATED WITH GAS OIL #2 AND STANDARD TEST CONDITIONS B
HDS = hydrodesulfurization activity,
HDN = hydrodenitrogenation activity.

## Claims

**1.** A method for modifying the surface properties and characteristics of a hydrotreating catalyst which comprises:
contacting a catalyst comprising a support promoted with at least one Group VIB metal and at least one iron Group VIII metal with a sulfur compound and an organo-silicon compound at an elevated temperature and for a period of time sufficient to form a sulfided and silanated catalyst having surface structures and compositions substantially different from the catalyst prior to sulfiding and silanating and which catalyst exhibits increased activity for hydrotreating hydrocarbon-containing streams in comparison with the same catalyst that has not been silanated.

**2.** A method according to claim 1 wherein the amount of sulfiding ranges from 0.5X stoichiometric to 1.5 stoichiometric based upon the active metal components of the catalyst and the amount of silanation ranges from 0.1 to 1 monolayer based on the surface area of the catalyst.

**3.** A method according to claim 1 wherein the support comprises alumina and a monolayer of silica is formed on the alumina surface.

**4.** A method according to claim 1 wherein the sulfur compound and organo-silicon compound are present in a hydrocarbon stream which is contacted with the catalyst composition in a reaction zone in which the hydrocarbon stream is to be hydrotreated.

**5.** A method according to claim 4 wherein sulfiding and silanating of the catalyst is effected in the reaction zone prior to commencing hydrotreatment of the hydrocarbon stream.

**6.** A method according to claim 4 wherein sulfiding and silanating are carried out under conditions in which concurrent desulfurization and denitrogenation of a hydrocarbon feed stream takes place in the reaction zone.

**7.** A method according to claim 1 comprising contacting at least partially deactivated hydrotreating catalyst with a sulfur compound and an organo-silicon compound to reactivate the catalyst for hydrotreating hydrocarbon streams.

**8.** A hydrotreating silanated and sulfided catalyst composition comprising a support promoted with at least one of Group VIB metal and at least one Group VIII metal, sulfur and a monolayer of silica formed thereon.

**9.** A catalyst according to claim 8 wherein the support is promoted with combinations of metals selected from (a) cobalt and molybdenum (b) nickel and molybdenum, and (c) tungsten and nickel.

**10.** A catalyst according to claim 8 wherein the support comprises alumina and the amount of silica present ranges from 0.1 to about 10 weight percent of the total catalyst composition.

**11.** A process for hydrodesulfurization and hydrodenitrogenation of hydrocarbon streams containing sulfur- and nitrogen- containing compounds which comprises (a) contacting a hydrocarbon stream containing nitrogen and sulfur compounds under hydro-desulfurization and hydro-denitrogenation conditions in a reaction zone with a catalyst comprising a sulfided and silanated support promoted with at least one Group VIB metal and at least one iron Group VIII metal, and (b) removing the hydrocarbon stream from the reaction zone substantially freed of nitrogen and sulfur compounds.

**12.** A process according to claim 11 wherein a sulfur compound and an organo-silicon compound are added to a hydrocarbon stream being passed to the reaction zone so that sulfiding and silanating are effected in situ in the reaction zone during desulfurization and denitrogenation.

**13.** A process according to claim 11 wherein the catalyst is pre-sulfided prior to hydro-denitrogenation and hydro-desulfurization and contacting of the presulfided catalyst with a hydrocarbon stream is carried out in the presence of an organo-silicon compound.

**14.** A method according to claim 11 wherein an organo-silicon compound is introduced into the reaction zone to reactivate the catalyst zone after extended hydro-desulfurization and hydro-denitrogenation and at least partial deactivation of the catalyst has taken place.

European Patent Office

# EUROPEAN SEARCH REPORT

Application Number
EP 93 30 6789

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 689 314 (N. P. MARTINEZ)<br>* claims 1-5; figure 1 *<br>* example 1; tables 1,5 * | 1,3,5, 8-11,13 | B01J23/85<br>B01J31/02<br>B01J37/08<br>C10G47/12 |
| X | EP-A-0 494 528 (EXXON)<br>* page 9, line 8 - line 45 * | 1,8-11 | |
| A | FR-A-2 280 614 (SNAM PROGETTI) | | |

TECHNICAL FIELDS SEARCHED (Int.Cl.5)

B01J

The present search report has been drawn up for all claims

| Place of search | Date of completion of the search | Examiner |
|---|---|---|
| THE HAGUE | 24 November 1993 | Thion, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)